# EUROPÄISCHE PATENTSCHRIFT

(11) **EP 2 599 265 B1**
(45) Veröffentlichungstag und Bekanntmachung des Hinweises auf die Patenterteilung: **19.03.2014**
(21) Anmeldenummer: 11741099.3
(22) Anmeldetag: 01.07.2011
(51) Int. Cl.: H04L 12/40, H04L 12/12, H04L 29/06, G05B 19/042

(54) **VERFAHREN ZUM BETREIBEN EINES BUSSTEUERGERÄTS SOWIE BUSSTEUERGERÄT**
METHOD FOR OPERATING A BUS CONTROL UNIT, AND BUS CONTROL UNIT
PROCÉDÉ DE FONCTIONNEMENT D'UN APPAREIL DE COMMANDE DE BUS ET APPAREIL DE COMMANDE DE BUS

(30) Priorität: 31.07.2010 DE 102010032993
(43) Veröffentlichungstag der Anmeldung: 05.06.2013
(73) Patentinhaber: Audi AG, 85045 Ingolstadt (DE)
(72) Erfinder: HARTMANN, Jürgen, 91468 Gutenstetten (Pahres) (DE); NAGY, Günther, 85057 Ingolstadt (DE); SPÄTH, Karl, 85920 Kösching (DE)
(74) Vertreter: Brandt, Kai
(86) Internationale Anmeldenummer: PCT/EP2011/003265
(87) Internationale Veröffentlichungsnummer: WO 2012/016613

(56) Entgegenhaltungen:
- WO-A2-2008/110957
- DE-A1- 4 446 314

## Beschreibung

Die Erfindung betrifft ein Verfahren zum Betreiben eines an einen Bus, insbesondere einen CAN-Bus, angeschlossenen Steuergeräts. Es betrifft auch ein solches (Bus-) Steuergerät. CAN steht für "Controller Area Network". Der CAN-Bus ist ein asynchrones, serielles Bussystem und gehört zu den Feldbussen (siehe den Wikipedia-Eintrag hierzu in der Fassung vom 15.07.2010).

Steuergeräte verbrauchen Energie, so dass ihr Betrieb zu einer Entladung einer Batterie führt. Der CAN-Bus wird insbesondere in einem Fahrzeug eingesetzt, und dessen Batterie kann durch die Steuergeräte entladen werden.

Aus diesem Grunde deaktivieren sich die Steuergeräte an sich nach einer vorbestimmten Zeit immer. Ist nun ein Steuergerät auf Kommunikation bzw. Mitwirkung von anderen Steuergeräten in seinen Betrieb angewiesen, so kann es verhindern, dass sich diese anderen Steuergeräte selbst deaktivieren, indem es eine Botschaft zum Aktivhalten dieser anderen Steuergeräte aussendet (eine solche Botschaft kann man auch als Netzwerkmanagement-Botschaft bezeichnen).

Die Botschaft enthält insbesondere zumindest ein Bit, mithilfe dessen ein Grund für das Aktivhalten mitgeteilt wird.

Es kann nun sein, dass ein Steuergerät fehlerhaft funktioniert, indem z. B. ein entsprechendes Softwaremodul zum Aussenden der Botschaft zum Aktivhalten nicht ordnungsgemäß arbeitet. In diesem Falle kann es sein, dass eine Botschaft zum Aktivhalten ausgesendet wird, auch wenn dies gar nicht benötigt wird. Dann werden die anderen Steuergeräte aktiv gehalten, und es wird dauerhaft Energie verbraucht, was irgendwann zur vollständigen Entleerung der zugehörigen Batterie als Energiequelle führt.

Eine so genannte "Watchdog-Funktion" ist im Zusammenhang mit Bussteuergeräten aus der DE 10 2004 026 383 B4 bekannt.

Das Dokument WO2008/110957 A2, offenbart eine Überwachungsvorrichtung die mit der (Ein-/) Ausgabeleitung einer Bussteuereinrichtung verbunden ist. Die Überwachungsvorrichtung überprüft das von der Bussteuereinrichtung gesendete Rahmenformat ob eine erwartete Datensequenz korrekt gesendet wurde. Eine Abweichung des übertragenen Rahmens von der erwarteten Datensequenz wird an den übergeordneten Host gemeldet, welcher die Bussteuereinrichtung dann anhält oder zurücksetzt.

Es ist Aufgabe der vorliegenden Erfindung, einen Weg aufzuzeigen, wie ein Bussteuergerät funktionssicher betrieben werden kann.

Die Aufgabe wird in einem Aspekt durch das Verfahren mit den Merkmalen gemäß Patentanspruch 1 und in einem anderen Aspekt durch das Steuergerät mit den Merkmalen gemäß Patentanspruch 4 gelöst.

Erfindungsgemäß liest somit das Steuergerät alle von ihm ausgesandten Botschaften zum Aktivhalten und überprüft, ob ein Grund mitgeteilt ist. Bei Fehlen eines Grundes wird eine Zurücksetzung zumindest eines Teils seiner Funktionen bewirkt.

Die Erfindung beruht auf der Erkenntnis, dass eine fehlerhafte Aussendung von Botschaften zum Aktivhalten, also eine Aussendung im Falle, dass kein Grund gegeben ist, in der Regel dazu führt, dass auch kein solcher Grund mitgeteilt wird. An dem Fehlen eines Grundes lässt sich also die Fehlerhaftigkeit in der Betriebsweise des Steuergeräts erkennen.

Dadurch, dass Funktionen zurückgesetzt werden, kann der Fehler behoben werden.

Wenn Funktionen einer Datenverarbeitungsvorrichtung wie einem Steuergerät zurückgesetzt werden, so kann entweder Software zurückgesetzt werden, also wird bei Fehlen eines Grundes dann ein gerade ausgeführtes Programm neu gestartet. Genauso kann ein bestimmtes Bauteil in einen vorbestimmten Betriebszustand zurückversetzt werden. Hier bietet es sich an, einen Prozessor vollständig zurückzusetzen.

Das erfindungsgemäße Steuergerät ist ausgelegt, das erfindungsgemäße Verfahren auszuführen, so dass die Vorteile des erfindungsgemäßen Verfahrens entsprechend auch für das erfindungsgemäße Steuergerät gelten.

Nachfolgend wird eine bevorzugte Ausführungsform der Erfindung unter Bezug auf die Zeichnung beschrieben, in der
- Fig. 1: eine Anordnung zeigt, bei der das erfindungsgemäße Verfahren einsetzbar ist, und
- Fig. 2: ein Flussschaubild zur Erläuterung einer bevorzugten Ausführungsform des erfindungsgemäßen Verfahrens ist.

An einem im Ganzen mit 10 bezeichneten Controller Area Network-Bus (CAN-Bus) sind Steuergeräte 12a, 12b, 12c angekoppelt. Jedes Steuergerät 12a bis 12c weist einen Mikroprozessor µP auf.

Das Steuergerät 12a bis 12c schaltet sich nach einer vorbestimmten Zeit ab, wenn es selbst keine Aufgabe zu erfüllen hat. Es kann sein, dass eines der Steuergeräte 12a eine Aufgabe zu erfüllen hat, an der die anderen Steuergeräte 12b und 12c teilhaben sollen. Dann sendet es eine Botschaft B aus, die die Mitteilung A macht, dass die anderen Steuergeräte 12b und 12c aktiv bleiben sollen, wobei ein Grund G hierfür in der Botschaft B beinhaltet ist (die Botschaft wird durch geeignet gesetzte Bits übermittelt).

Es kann nun sein, wie zum Steuergerät 12b gezeigt, dass ein Steuergerät aufgrund einer Fehlfunktion, z. B. einer nicht ordnungsgemäß ablaufenden Software, den anderen Steuergeräten 12a und 12c die Mitteilung A gibt, dass diese aktiv zu bleiben haben, auch wenn das Steuergerät 12b gar nicht eine Aufgabe abarbeiten muss, bei der es der Mitwirkung dieser anderen Steuergeräte bedarf. Die von dem Steuergerät 12b hierbei ausgesandte Botschaft B' enthält aber in der Regel keinen Grund G.

Dies macht man sich vorliegend zunutze:
Das erfindungsgemäße Verfahren beginne mit einem ordnungsgemäßen Zustand eines Steuergeräts, demgemäß eine Botschaft B in Schritt S10 ausgesandt wird. Jedes Steuergerät soll nun selbst die von ihm ausgesandten Botschaften zum Aktivhalten der anderen Busteilnehmer (Steuergeräte) selbst noch einmal lesen, also durch eine von der aussendenden unabhängigen Softwareeinheit oder ein unabhängiges Bauteil zu überprüfen. In Schritt S12 wird daher die Botschaft gelesen, die das Steuergerät ausgesandt hat. Es wird daraufhin überprüft, ob der Grund G enthalten ist. Solange der Grund G in der Botschaft enthalten ist, arbeitet das Steuergerät ordnungsgemäß, und es ist keine weitere Maßnahme notwendig, als dass immer wieder erneut der Schritt S12 durchgeführt wird. Ist hingegen der Grund G in einer Botschaft nicht enthalten, dann arbeitet das Steuergerät nicht ordnungsgemäß, und es erfolgt in Schritt S14 ein Neustart, wobei vorliegend der jeweilige Mikroprozessor µP vollständig (komplett) zurückgesetzt wird. Er wird also z. B. in einen ansonsten bei Einschalten des Steuergeräts herrschenden Zustand versetzt. Nach dem Neustart beginnt wieder die ordnungsgemäße Betriebsweise des Steuergeräts, also wird irgendwann in einem Schritt S10 eine Botschaft B ausgesandt.

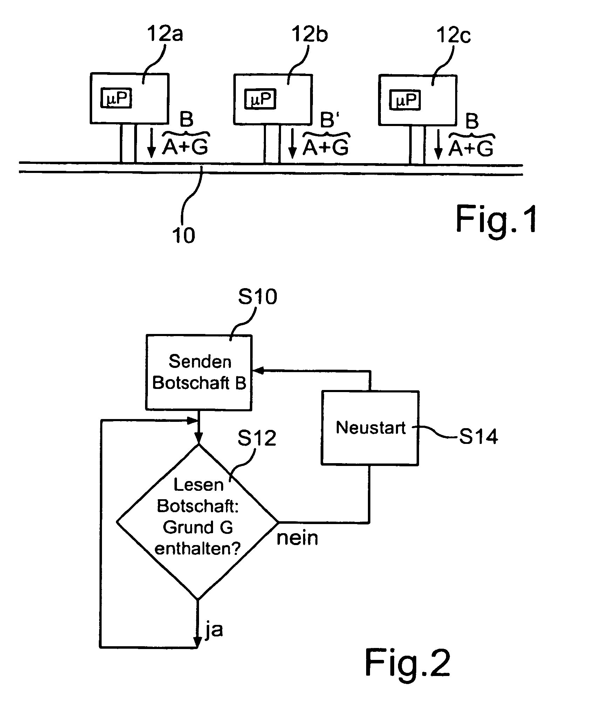

Bei dem erfindungsgemäßen Verfahren ist von einem Beginn nach Schritt S10 ausgegangen, grundsätzlich kann der Schritt S12 aber unmittelbar mit Einschalten des Steuergerätes ausgeführt werden. Ein zuvoriges Senden einer ordnungsgemäßen Botschaft B ist nicht notwendig, sondern der Fall der Fig. 2 ist lediglich eine bevorzugte Ausführungsform.

Durch die Erfindung wird bezüglich des Aussendens von Botschaften zum Aktivhalten (Netzwerkmanagement-Botschaften) eine Watchdog-Funktion realisiert.

## Patentansprüche

1. Verfahren zum Betreiben eines an einen Bus, insbesondere einen CAN-Bus (10), angeschlossenen Steuergeräts (12a, 12 b, 12c), das in seinem ordnungsgemäßen Betrieb zur Aufrechterhaltung der Kommunikation mit zumindest einem anderen Steuergerät des Busses (10) über zumindest ein Bit eine Botschaft (B) zum Aktivhalten des zumindest einen anderen Steuergeräts aussendet und über zumindest ein Bit in der Botschaft einen Grund (G) für das Aktivhalten mitteilt,
**dadurch gekennzeichnet, dass**
das Steuergerät (12a, 12b, 12c) alle von ihm ausgesandten Botschaften (B, B') zum Aktivhalten liest und überprüft (S12), ob ein Grund (G) für das Aktivhalten mitgeteilt ist, und bei Fehlen eines Grundes eine Zurücksetzung (S14) zumindest eines Teils seiner Funktionen, insbesondere von Softwarefunktionen oder Bauteilen, bewirkt.

2. Verfahren nach Anspruch 1,
**dadurch gekennzeichnet, dass**
bei Fehlen eines Grundes ein gerade ausgeführtes Programm neu gestartet wird.

3. Verfahren nach Anspruch 1,
**dadurch gekennzeichnet, dass**
bei Fehlen eines Grundes ein Prozessor (µP) des Steuergeräts vollständig zurückgesetzt wird.

4. Steuergerät (12a, 12b, 12c) zum Anschließen an einen Bus (10), insbesondere einen CAN-Bus, das in der Lage ist, Botschaften (B) zum Aktivhalten anderer Steuergeräte an dem Bus (10) in selbigen auszusenden (S10) und über zumindest ein Bit in der Botschaft einen Grund für das Aktivhalten mitzuteilen,
**dadurch gekennzeichnet, dass**
das Steuergerät (12a, 12b, 12c) ausgelegt ist, alle von ihm ausgesandten Botschaften (B, B') zum Aktivhalten zu lesen und zu überprüfen (S12), ob ein Grund (G) für das Aktivhalten in der Botschaft (B, B') mitgeteilt ist, und bei Fehlen eines Grundes eine Zurücksetzung (S14) zumindest eines Teils seiner Funktionen zu bewirken.

## Claims

1. Method for operating a control device (12a, 12b, 12c) connected to a bus, more particularly a CAN bus (10), which, during its proper operation, in order to maintain communication with at least one other control device of the bus (10), sends via at least one bit a message (B) for keeping the at least one other control device active, and communicates in the message via at least one bit a reason (G) for remaining active,
**characterised in that**
the control device (12a, 12b, 12c) reads every keep-active message (B, B') sent by said control device and checks (S12) whether a reason (G) for remaining active has been communicated, and, in the absence of a reason, resets (S14) at least some of its functions, in particular software functions or components.

2. Method according to claim 1,
**characterised in that**,
in the absence of a reason, a program which is currently being executed is restarted.

3. Method according to claim 1,
**characterised in that**,
in the absence of a reason, a processor (µP) of the control device is completely reset.

4. Control device (12a, 12b, 12c) for connecting to a bus (10), more particularly a CAN bus, which control device is capable of sending (S10) messages (B) to the bus for keeping other control devices on said bus (10) active, and of communicating a reason for remaining active in the message via at least one bit,
**characterised in that**
the control device (12a, 12b, 12c) is designed to read every keep-active message (B, B') sent by said control device and to check (S12) whether a reason (G) for remaining active has been communicated, and, in the absence of a reason, to reset (S14) at least some of its functions.

## Revendications

1. Procédé de fonctionnement d'un appareil de commande (12a, 12b, 12c) connecté à un bus, en particulier à un bus CAN (10), lequel appareil délivre, dans son fonctionnement normal pour le maintien de la communication avec au moins un autre appareil de commande du bus (10), via au moins un bit, un message (B) pour maintenir en activité le au moins un autre appareil de commande et communique, via au moins un bit du message, une raison (G) pour le maintien en activité,
**caractérisé en ce que**
l'appareil de commande (12a, 12b, 12c) lit tous les messages (B, B') envoyés par ses soins pour le maintien en activité et vérifie (S12) si une raison pour le maintien en activité lui a été communiquée et, en l'absence d'une raison, provoque une remise à zéro (S14) d'au moins une partie de ses fonctions, en particulier de fonctions logicielles ou de composants.

2. Procédé selon la revendication 1,
**caractérisé en ce que**,
en l'absence d'une raison, un programme qui vient d'être réalisé est redémarré.

3. Procédé selon la revendication 1,
**caractérisé en ce que**,
en l'absence d'une raison, un processeur (µP) de l'appareil de commande est complètement remis à zéro.

4. Appareil de commande (12a, 12b, 12c) pour connecter à un bus (10), en particulier à un bus CAN, qui est en mesure de délivrer (S10) de lui-même des messages (B) au bus pour maintenir l'activité d'autres appareils de commande et de communiquer, via au moins un bit du message, une raison pour le maintien en activité,
**caractérisé en ce que**
l'appareil de commande (12a, 12b, 12c) est conçu pour lire tous les messages (B, B') envoyés par ses soins pour le maintien en activité et vérifier (S12) si une raison (G) pour le maintien en activité lui a été communiquée dans le message (B, B') et, en l'absence d'une raison, provoquer une remise à zéro (S14) d'au moins une partie de ses fonctions.
